# EUROPEAN PATENT SPECIFICATION

(11) **EP 1 600 086 B1**
(45) Date of publication and mention of the grant of the patent: **27.06.2007**
(21) Application number: 05104356.0
(22) Date of filing: 23.05.2005
(51) Int. Cl.: A47J 31/36, A47J 31/30

(54) **Electric coffee maker for the production of espresso coffee**
Elektrische Kaffeemaschine zur Herstellung von Espresso-Kaffee
Machine à café éléctrique pour la production de café expresso

(30) Priority: 28.05.2004 IT FI20040121
(43) Date of publication of application: 30.11.2005
(73) Proprietor: BIALETTI INDUSTRIE S.P.A., 25030 Coccaglio (Brescia) (IT)
(72) Inventor: Baldacci, Francesco, 50129, Firenze (IT)
(74) Representative: Bardini, Marco Luigi

(56) References cited:
- EP-A- 1 388 313

## Description

The present invention relates to an electric coffee maker for the production of espresso coffee.

The traditional coffee maker for domestic use, of the type commonly known as moka or mocha, is formed by a lower vessel and an upper vessel generally screwed axially and tightly one to the other and communicating via an intermediate, substantially funnel-shaped vessel having a tubular portion. An axial duct, open at the upper end and if necessary provided with a dispensing member, extends from the base of the upper vessel. The coffee powder is placed in the intermediate vessel, while the lower vessel, which acts as a boiler, is filled with water as far as a preset level. The formation of steam in the boiler following the administering of heat causes an increase in pressure therein, sufficient for causing the hot water to rise up along the tubular portion of the intermediate vessel, forcing it to diffuse in the layer of coffee powder, traversing it and rising up along the axial duct of the upper vessel so as to pour into it, flowing from its free end.

In this type of domestic coffee maker the working pressure of the hot water that traverses the layer of coffee powder is generally very low and, since it is limited by a safety valve, the pressure drop through the layer of coffee powder cannot go beyond certain values. The low pressure of the hot water is responsible for the incomplete process of infusion whose effect influences the properties of the coffee produced.

Conventional domestic coffee makers generally use an external source of heat, for example a gas or other fuel cooker or an electric plate, although small coffee makers for domestic use with electrical heating are becoming increasingly widespread, that is to say coffee-makers provided with their own dedicated electric heater, in some cases integral with the boiler and in others separable therefrom. The success of electric coffee makers is due above all to their greater versatility of use, as they allow coffee to be prepared anywhere, even where a cooker is not available, for example in a bedroom or an office and, in the portable version, also in a car. An example of an electric moka coffee maker is disclosed in EP-A-1388313.

From the standpoint of the properties of the coffee produced, both traditional domestic coffee makers and those associated with dedicated electrical heating means, have the limitation, as referred previously, of not allowing preparation of real espresso coffee such as that which can be produced with professional machines for use in bars or also with espresso coffee makers for domestic use. The production of espresso coffee requires, as is known, in addition to a very fine grain size of the coffee powder used, also careful control of the temperature and pressure inside the boiler. In order to obtain the correct density of the infusion, it is important that diffusion of the water in the layer of coffee powder is as complete as possible and takes place at a constant temperature and for a preset time. These conditions cannot be observed in conventional domestic machines of the moka type wherein the contact time and the diffusion within the layer of coffee powder are controlled solely by the pressure of the steam which is formed in the boiler and which is responsible for the flow of hot water intended to traverse the layer of coffee powder.

In known machines for the production of espresso coffee, both domestic and professional, the pressure of the hot water inside the boiler is provided by a pump which feeds it over a filter filled with coffee powder and enclosed in a filter holder. The pressure of the water, associated with the finer grain size of the powder and a smaller section of the holes of the filtering plate, allows a more intense infusion process whereby the substances contained in the coffee powder, which confer to the infusion the typical properties of espresso coffee, are almost completely extracted.

On the other hand, for a number of reasons, including their simplicity of use and their established customary use, domestic moka coffee makers continue to be preferred over domestic machines for espresso coffee, despite the fact that the former do not succeed in achieving the typical quality features of espresso coffee. Their bulk in particular is considered to be one disadvantage of domestic machines for espresso coffee, which means they must be kept always on view on some furniture unit, and the fact that they traditionally do not allow preparation of more than two servings of coffee simultaneously, and therefore force replacement of the powder for each cup, or at most two cups, of coffee produced, whereas in moka coffee makers, according to their size, a much larger number of cups of coffee can be made.

Therefore, the main object of the present invention is to provide a coffee maker for domestic use which has the structure of a moka coffee maker yet which enables coffee infusions to be made with the typical properties of espresso coffee.

A particular object of the present invention is to provide a coffee maker of the type mentioned above which is small in size and, in any case, only slightly larger in size than a traditional moka coffee maker.

Another object of the present invention is to provide a coffee maker of the type mentioned above which allows the production of several servings of espresso coffee.

A further object of the present invention is to provide a coffee maker of the type mentioned above wherein the ordinary maintenance operations (washing of the boiler and coffee collecting vessel, and emptying the used coffee powder) are simple and fast and the risks of soiling for the user and worktops are minimised.

The basic features of the coffee maker for domestic use according to the present invention are claimed in claim 1. Further important features are claimed in the dependent claims.

These and other features, and advantages, of the coffee maker for domestic use according to the present invention will be made clearer by the following description of some embodiments thereof, given by way of a non-limiting example with reference to the accompanying drawings, wherein:
Figure 1 is an elevational sectional view of a first embodiment of the coffee maker according to the invention;
Figure 2 is a partially sectioned top plan view from above of the coffee maker of Figure 1;
Figure 3 is a sectioned view of the coffee maker of Figure 1 along line III-III of Figure 2;
Figure 4 is a partial elevational sectional view of a variation of the coffee maker of Figure 1;
Figure 5 is an enlarged section of detail A of Figure 4;
Figure 6 is a detail view of a releasable coupling for connection of the water supply line to the boiler of the coffee maker of Figure 1;
Figure 7 is an elevational sectional view of a second embodiment of the coffee maker according to the invention;
Figure 8 is a partial cross sectional view along line VIII-VIII of Figure 7;
Figure 9 is an axial sectional view along line IX-IX of Figure 7;
Figure 10 is an elevational sectional view of a third embodiment of the coffee maker according to the invention.

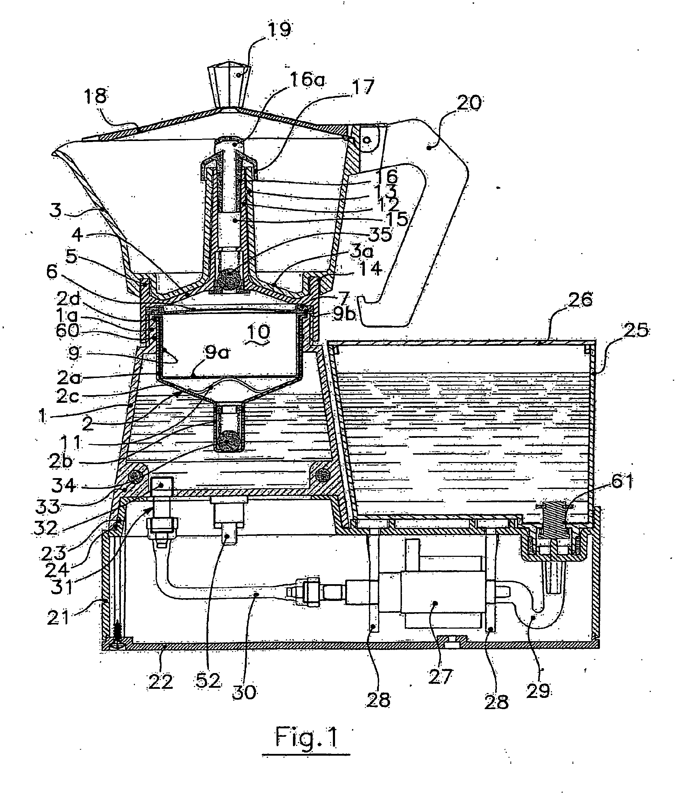

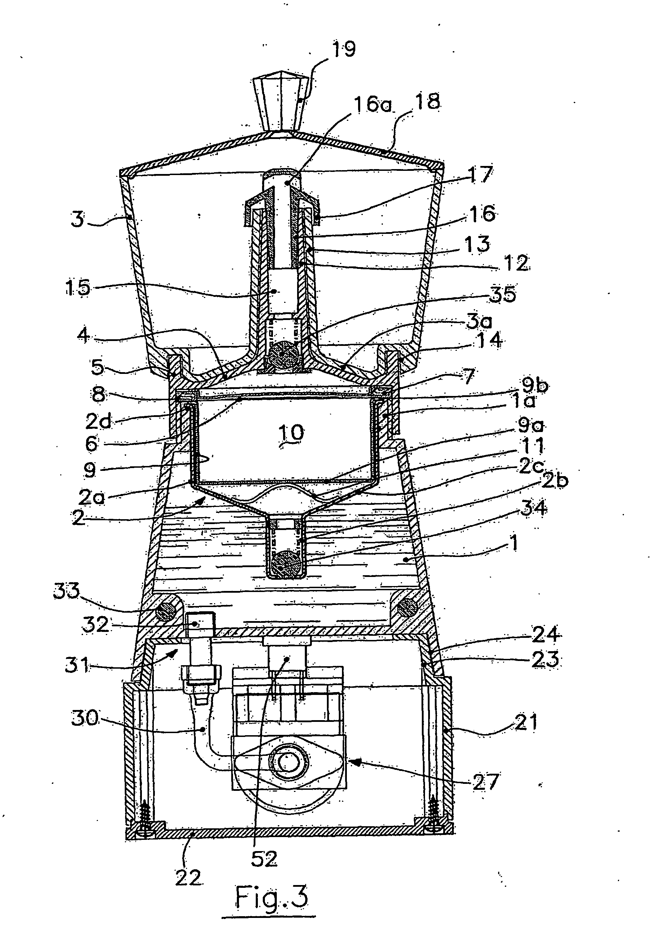

Referring to Figures 1, 2 and 3, the domestic coffee maker for producing espresso coffee according to the invention comprises a lower vessel 1 or boiler, an intermediate, substantially funnel shaped vessel 2 suitable for holding the coffee powder and tightly connected to the boiler 1 at its inlet, and an upper vessel 3 for collecting the coffee infusion, arranged coaxially to the boiler 1 and to the intermediate vessel 2. More specifically the intermediate vessel 2 has a cylindrical portion 2a and a tubular portion 2b joined one to the other by a truncated cone portion 2c, the tubular portion 2b extending axially towards the bottom wall of the boiler 1. The inlet of the boiler 1 is defined by a tubular wall 1a whereto the cylindrical portion 2a is connected tightly by means of an O ring 60. A small perimetric edge 2d projecting from the cylindrical portion rests on the edge of the tubular wall 1a.

A disk-shaped body 4 extends above the intermediate vessel 2 and is bordered around its perimeter by a sleeve edge 5 which is screwed externally to the tubular wall 1a. The disk 4 has a substantially conical shape slanting towards the upper vessel 3 above, and on the side of the intermediate vessel 2 holds a filtering plate 6 attached by means of an annular seal 7 engaged in a groove 8 formed on the internal face of the sleeve 5 immediately below the disk 4. The seal 7, in an elastic material, creates the hermetic tightness of the boiler 1 once the tubular sleeve 5 is screwed fully to the tubular wall 1a of the boiler 1.

Inside the cylindrical portion 2a of the intermediate vessel 2 a container 9 is placed, with a finely perforated base 9a which, together with the filtering plate 6, defines a chamber 10 for containing the coffee powder. The container for the coffee powder 9 has a small projecting perimeter edge 9b which is placed between the seal 7 and the corresponding small edge 2d of the intermediate vessel 2 when the sleeve 5 is completely screwed to the tubular wall 1a of the boiler 1, in this way securing the container 9 inside the intermediate vessel 2.

An elastic element 11 is provided inside the truncated cone portion 2c of the intermediate vessel 2. The elastic element 11 is placed between the truncated cone walls of portion 2c and the bottom wall 9a of the coffee powder container 9. The elastic element 11 is compressed by the base 9a when the sleeve 5 is fully screwed to the tubular wall 1a, so that, when said sleeve is unscrewed and removed, the elastic reaction of the elastic element 11 pushes the container 9 axially, making it project partially from the intermediate vessel 2 and thus facilitating its grip for subsequent extraction and removal of the used coffee powder. Moreover raising of the container 9 creates a vacuum in the part below it which draws the water located between the disk 4 and the surface of the coffee powder. This water, mixed with coffee powder, would otherwise inevitably flow to the outside, when the disk-shaped body 4 is unscrewed from the lower vessel 1.

A first tubular element 12 extends axially from the centre of the disk 4 inside the upper vessel 3 and a second tubular element 13, extending coaxially from the bottom wall 3a of the upper vessel 3, engages slidingly on the first tubular element 12. The base 3a rests on the disk 4, with the same configuration and slant, and along its perimeter a groove 14 is formed, wherein the tubular sleeve 5 engages, in this way removably securing the upper vessel 3 to the boiler 1.

The tubular element 12, which extends from the disk 4, defines a duct 15 ending with a flared portion in which a truncated cone bush 16 is engaged, with the same slant, ending with a radially perforated head 16a through which the coffee produced can flow. A skirt 17 extends radially from the bush 16, immediately below its perforated head 16a, and around the tubular element 13 at its free end. The bush 16, forming a watertight connection with the tubular element 12 due to the conicity of the respective reciprocal contact walls, prevents infiltration of the coffee infusion between the upper vessel 3 and the disk 4, assisted for this purpose also by the skirt 17 which covers the free ends of the two tubular elements 12 and 13.

The upper vessel 3 is provided, as is customary, with a lid 18, with a central knob 19 for its raising, and a side handle 20.

The lower vessel 1 is mounted on a box-shaped body 21 provided with a removable base 22. More specifically the box-shaped body 21 has a raised portion 23 which engages in a corresponding cavity 24 formed on the base of the lower vessel 1. A water reservoir 25, with a removable lid 26, is also positioned on the box-shaped body 21, alongside the lower vessel 1. Inside the box-shaped body 21 a pump 27 is placed, supported by elastic vibration-preventing supports 28 and connected to the reservoir 25 via a suction duct 29 and to the boiler 1 via a discharge duct 30. The connection between the duct 29 and the base of the reservoir 25 is formed by means of a valve 61 suitable for preventing the release of water from the reservoir when the latter is disengaged from the duct 29 so as to be removed from the box-shaped body 21, for example for cleaning. The discharge duct 30, in the present embodiment of the invention, is instead connected to the boiler 1 via a fixed coupling joint 31, so that the boiler 1 is integral with the box-shaped body 21 and can be separated therefrom only by accessing its interior and adjusting a connection ring nut. The joint 31 is connected to a release nozzle 32 situated on the bottom wall of the boiler 1, wherefrom the cold water flows out, preferably tangentially to the base of the boiler so as to eliminate, or at least limit, turbulence phenomena. In the present embodiment of the invention the water is heated by means of an electrical resistor 33 embedded in the metal of the boiler 1 on the bottom wall thereof and the temperature is controlled by means of a thermostat 52.

The coffee maker according to the invention is also provided with a control panel, not shown, formed for example frontally on the box-shaped body 21 and provided with all the pushbuttons and the operation indicators required for operative control of the coffee maker.

When using the coffee maker according to the invention, after having filled with water the reservoir 25 and the boiler up to the level indicated therein, and after having placed the coffee powder in the container 9, the chamber 10 is closed by screwing the disk 4 to the boiler 1 and positioning the upper reservoir 3 above it. The heating device is then switched on and remains in operation until the temperature of the water has reached the preset value (generally around 95°C). At this point the user, by pressing the pushbutton for starting the pump 27, causes water to flow into the boiler 1 which forces the hot water into the tubular portion 2b, making it pass through the layer of coffee powder and from there rise up through the duct 15 until it flows out into the upper vessel 3. The user will keep the pump 27 in operation until the level in the upper vessel 2 has risen to the level corresponding to the servings required. Preferably, for a direct check of the level in the upper vessel 3, the latter will be made of a transparent material and a scale indicating the servings which correspond to the level reached by the coffee infusion will be provided on the vessel wall.

In order to ensure that the hot water traverses the layer of coffee powder at an optimal pressure (generally around 2-4 bars, according to the degree of compression of the powder and its grain size), a valve 34 is placed inside the tubular portion 2b of the intermediate vessel 2, illustrated by way of an example in the form of a rubber ball forced elastically against the aperture for access to the tubular portion 2b. This valve avoids the pulsed feed of hot water at low pressure through the layer of coffee powder before the start of the pump. A further valve 35, also illustrated by way of an example in the same way as the valve 34, is provided at the inlet of the duct 15 with the triple function of ensuring discharge of the coffee infusion only after the pressure in the chamber 10 has reached a preset value sufficient for providing an optimal water-powder contact time, of forming in the duct 15 an orifice with restricted section for causing turbulence in the flow of liquid and with formation of the typical cream of espresso coffee, and finally of preventing the residual coffee remaining in the duct 15 from flowing out therefrom when the coffee maker is disassembled for cleaning.

Whereas the valve 35 is considered essential for the multiple functions it is called on to perform, the valve 34 is not strictly necessary for controlling the pressure inside the boiler. Although with a limited loss of working flexibility, this control too can be assigned to the valve 35. In this case the hot water gradually fills the intermediate vessel as the pump feeds cold water into the lower vessel and dispensing of the coffee infusion only starts when the pressure of the infusion above the coffee powder exceeds the calibration pressure of the valve 35.

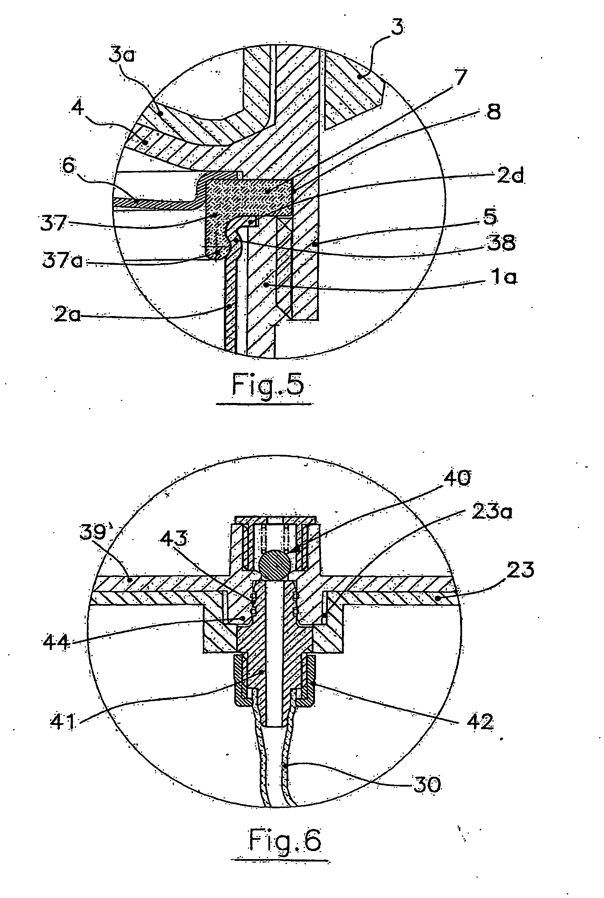

Figures 4 and 5 show a variation of the coffee maker according to the invention. In these figures, the components identical to those of the embodiment previously described and illustrated will be denoted by the same reference numerals and will not be described again. The variation illustrated in Figures 4 and 5 relates to the intermediate vessel 2 which, in this case, is housed removably in a freely sliding manner in the inlet opening of the boiler 1 and is not provided with the container 9 for the coffee powder, but has an evenly perforated plate 36 on which the coffee powder is placed directly. The seal 7 has an axial edge 37 extending inside the cylindrical portion 2a of the second vessel 2 and ending with an enlargement 37a which engages in a groove 38 formed on the wall of the cylindrical portion 2a. In this way engaging of the enlarged portion 37a in the groove 38 makes the cylindrical portion 2a integral with the seal 7 and therefore, by removing the disk 4, the intermediate vessel 2 is also extracted simultaneously from the boiler 1 with its content of used coffee powder. Once extracted from the boiler 1, it is easy to separate the intermediate vessel 2 from the seal 7 by a slight traction, in order to proceed subsequently with its emptying and washing. In addition to allowing easy removal of the intermediate vessel, with this solution too the leakage of liquid mixed with coffee powder is avoided when unscrewing the disk-shaped body 4 due to the vacuum created by raising of the intermediate vessel 2.

Figure 6 illustrates an example of coupling connection joint which allows the boiler 1 to be separated from the body 21 whenever required, for example for cleaning of the boiler, and which can be used as an alternative to a fixed coupling. In this case on the bottom wall 39 of the boiler a valve 40 is provided which intercepts the exit of a tubular element 41, at the entrance whereof the discharge duct 30 of the pump is connected and which is fixed thereon by means of a tightening screw nut 42 screwed to the body of the tubular element 41. The latter is attached, for example screwed, to the raised portion 23 of the base 21 in a special housing 23a formed thereon. The tubular element 41 is tightly coupled in a housing 43 formed on the base 39 at the valve 40.

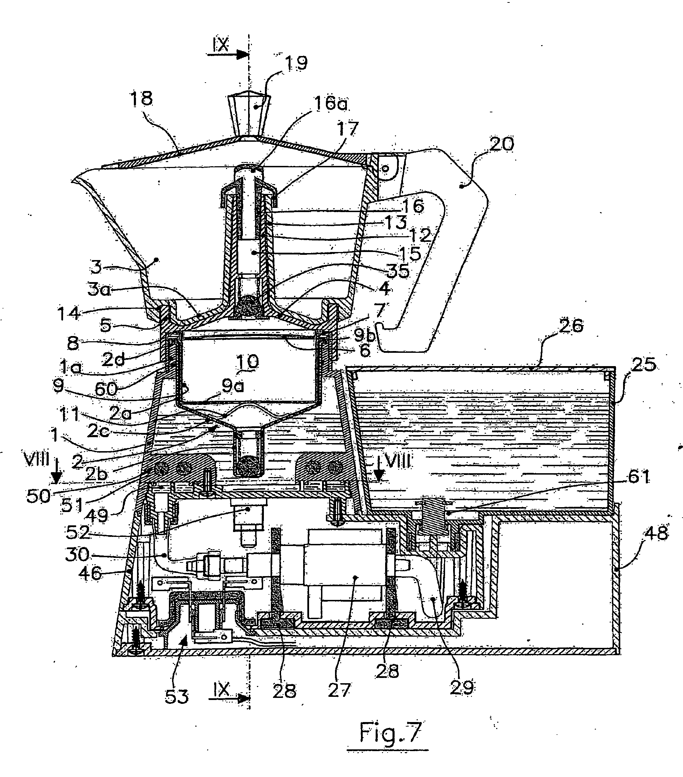

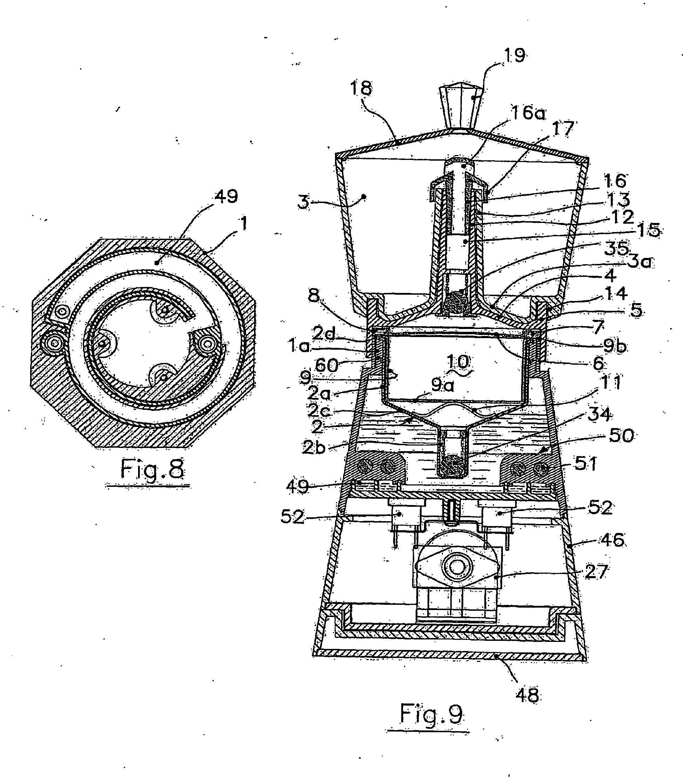

Figures 7, 8 and 9 illustrate a second embodiment of the coffee maker according to the invention wherein components identical to those present in the first embodiment previously described and illustrated have the same reference numerals. In this embodiment of the invention the pump 27 is housed in a box-shaped body 46 integral with the lower vessel 1 and rests on a base 48 on which the reservoir 25 also rests. The pump 27 is mounted on vibration-preventing supports 28 and is connected to the reservoir 25 via a suction duct 29 and to the boiler 1 via a discharge duct 30. The discharge duct 30, in the present embodiment of the invention, flows into a spiral path 49 formed on the base of the boiler 1, which can be seen in particular in Figure 8, and forming part of a known and so-called "Thermoblock" device, denoted by 50, formed by armoured and co-moulded resistors 51 embedded in the metal of the boiler 1 and extending above the spiral path 49. A pair of thermostats 52 are provided on the base of the boiler 1 to control the temperature of the water which in this case reaches almost instantaneously its optimal value while passing in the spiral duct 49 and then the production of coffee can begin automatically once the boiler 1 is filled.

A rapid electrical connection, generally indicated at 53 in figure 7, known commercially by the name STRIX, which, since it is well known in the sector of small electric household appliances, is not illustrated in further detail.

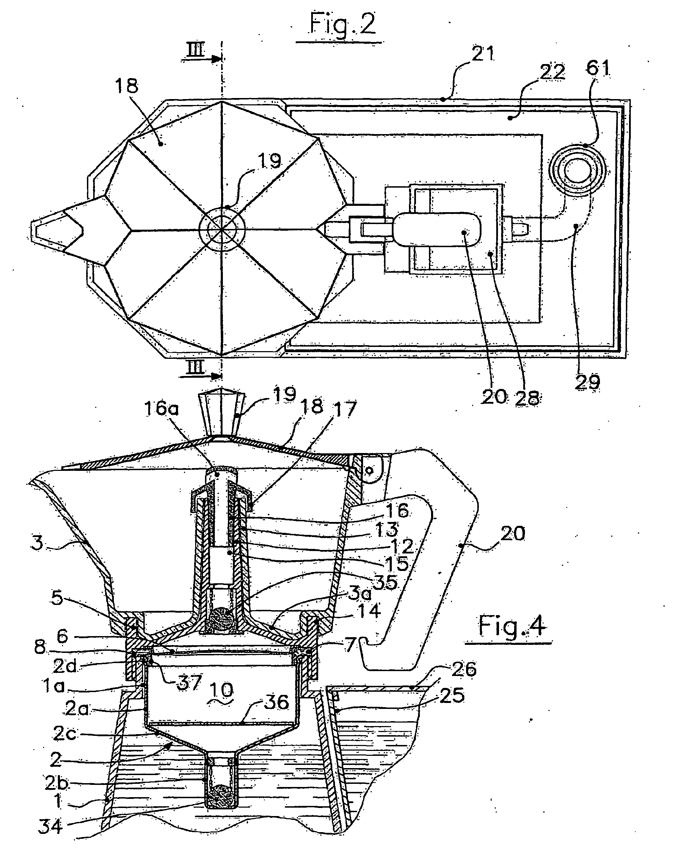

Compared to the embodiment shown in Figures 2-3, in this case the actual coffee maker with associated box-shaped body 46 can be separated from the reservoir 25 and from the base 48 whenever necessary, for example in order to remove the used coffee powder, allowing performance of the operation for example over the sink in order not to soil the worktop with sprays of water which inevitably come out of the boiler when it is separated from the disk 4.

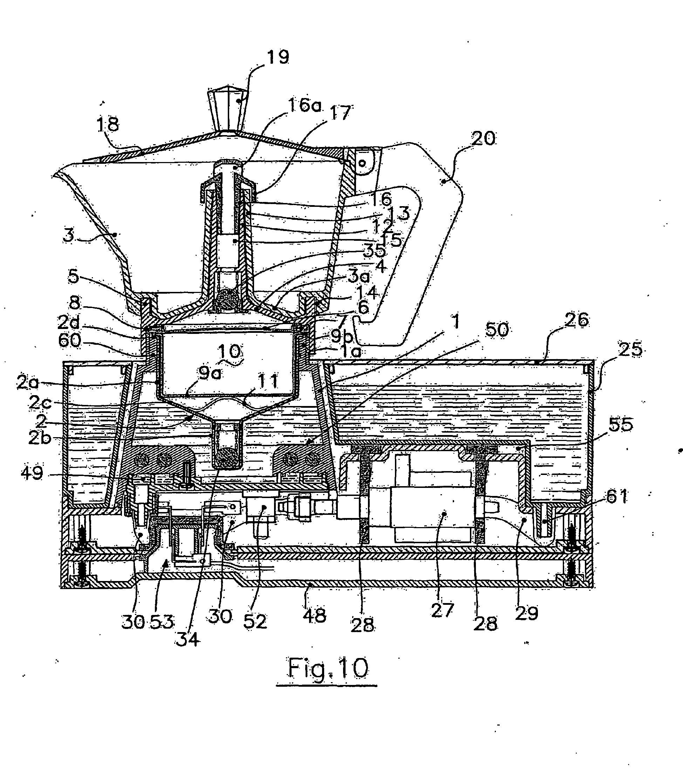

In the embodiment illustrated in Figure 10, the pump 27 for feeding water to the boiler 1 is housed in a cavity 55 formed in the lower part of the water reservoir 25 and its suction and discharge ducts 29 and 30 are connected in a fixed manner to the reservoir 25 and to the boiler 1 respectively. The base 48 contains only the electrical part of the appliance and the electrical connector 53, of the STRIX type, and can be separated from the rest of the appliance. In this solution the reservoir 25 surrounds the boiler 1, in this way recovering the volume lost due to the cavity 55.

The heating device provided in one of the embodiments described and illustrated above can alternatively be used also in the other embodiments, and different heating devices and means from those illustrated can be used, provided they are functionally equivalent. The same applies for the valves illustrated only by way of an example.

Variants and/or modifications may be made to the coffee maker for domestic use for making espresso coffee according to the present invention without thereby departing from the scope and spirit of the invention as set forth in the following claims.

## Claims

1. Domestic coffee maker for making espresso coffee, comprising: a lower vessel (1) with an inlet opening and an intermediate vessel (2) with a substantially funnel shape placed axially in said lower vessel, said lower vessel being associated with electric heating means (33,50) to heat water contained therein, said intermediate vessel comprising at least one perforated plate (6) defining a containment chamber (10) for the coffee powder therewith; an upper vessel (3) mounted axially and removably on said lower vessel and communicating with the latter via said intermediate vessel; means (4,7) for reversibly connecting said intermediate vessel to said lower vessel in a tight way, in respect of the outside, **characterised in that** said lower vessel (1) is hydraulically connected to a water reservoir (25) via pump means (27), said reservoir being placed alongside said lower vessel and on the same support (21), the water being fed into said lower vessel near said electric heating means, means (34,35) also being provided for controlling the pressure of the heated water and/or of the coffee produced so that dispensing of the coffee in said upper vessel only takes place when the water/coffee pressure reaches a predetermined value.

2. Coffee maker according to claim 1, wherein said watertight connection means comprise a disk-shaped body (4) above said intermediate vessel (2) delimited by a perimetric sleeve (5) integral thereto and which can be reversibly connected to said lower vessel (1), said disk-shaped body (4) being provided with an annular seal (7) which is tightened against said lower vessel when said sleeve is connected to said lower vessel, said disk-shaped body also having a passage (15) for placing said chamber in communication with said upper vessel.

3. Coffee maker according to claim 1 or 2, wherein said watertight connection means comprise a first axial tubular element (12), extending in said upper vessel (3), which has a bottom wall (3a) wherefrom a second tubular element (13) rises up, said second tubular element being mounted coaxially and slidingly in relation to said first tubular element, the latter communicating with the chamber (10) of said intermediate vessel (2) and being provided at its free end with means (16) for dispensing the coffee produced, suitable for creating a watertight seal between said first and said second tubular element.

4. Coffee maker according to claim 3, wherein said dispensing means comprise a truncated cone sleeve (16) engaged in a correspondingly flared end portion of said first tubular element (12) and a skirt (17) extending radially from said sleeve and placed around the end portion of said second tubular element (13).

5. Coffee maker according to any one of the previous claims, wherein the inlet of said lower vessel is delimited laterally by a tubular wall (1a) and said sleeve (5) is reversibly attached to said wall.

6. Coffee maker according to any one of the previous claims, wherein said pump means (27) are placed inside said support (21).

7. Coffee maker according to any one of claims 1 to 5, wherein said pump means (27) are placed inside a box-shaped body (46) integral with said lower vessel (1) and removable from said support (21).

8. Coffee maker according to any one of claims 1 to 5, wherein said pump means (27) are placed in a cavity (55) formed in said water reservoir (25) and are fixedly connected to said lower vessel (1) and to said reservoir (25) .

9. Coffee maker according to any one of the previous claims, wherein said intermediate vessel (2) is removably and tightly connected to said lower vessel (1) and houses a container (9) with perforated bottom (9a) for the coffee powder, removable therefrom.

10. Coffee maker according to claim 9, wherein elastic means (11) are provided, between the bottom (9a) of said container (9) and said intermediate vessel and are in a compressed state, so that by removing said watertight connection means said container (9) is forced to slide axially in relation to said intermediate vessel (2) and to project partially therefrom.

11. Coffee maker according to any one of claims 1 to 8, wherein said intermediate vessel (2) is mounted in a freely sliding manner in relation to said lower vessel (1) and the seal (7) integral with said watertight connection means (4,5) has an axial annular appendage (37) extending within said intermediate vessel (2) and having an enlarged portion (37a) which engages in an annular groove (38) thereof, so that said intermediate vessel (2) is made elastically integral with said watertight connection means (4,5) and, when these are separated from said lower vessel, said intermediate vessel is extracted together with them.

12. Coffee maker according to any one of the previous claims, wherein said intermediate vessel (2) comprises a tubular portion (2b) extending in said lower vessel (1), said means (34) for controlling the pressure of the water being placed therein.

13. Coffee maker according to any one of the previous claims, wherein said first tubular element (12) defines an outlet duct (15) from said chamber, wherein valve means (35) are provided for creating a restricted section for the flow of liquid passing therethrough.

14. Coffee maker according to any one of claims 1 to 11, wherein said first tubular element (12) defines an outlet duct (15) from said chamber, said means (34,35) of controlling the pressure of the coffee produced being placed therein.

15. Coffee maker according to any one of the previous claims, wherein in the bottom wall (3a) of said upper vessel (3) a groove (14) is formed along the perimeter for engaging said sleeve (5).

16. Coffee maker according to any one of the previous claims, wherein said lower vessel (1) is integrally connected to said pump means (27).

17. Coffee maker according to any one of claims 1 to 15, wherein said lower vessel (1) is tightly connected in a releasable manner to said pump means (27).

18. Coffee maker according to claim 17, wherein said releasable watertight connection comprises an on-off valve (40) at the outlet of a sleeve (41) engaged in said discharge tube (30) of said pump means (27), a first housing (23a) formed on said base (23) in which said sleeve (41) is engaged for releasable connection to said base and a second housing (43) formed on the bottom wall (39) of said lower vessel (1) coaxially to said first housing (23a) to house tightly the outlet end of said sleeve (41) and the on-off valve (40).

19. Coffee maker according to anyone of the previous claims, wherein in said lower vessel (1) a inlet water nozzle (32) is provided, hydraulically connected to said discharge duct (30) for feeding water tangentially to the base (39) of said vessel (1).

## Patentansprüche

1. Haushaltskaffeemaschine, um Espressokaffee zu machen, enthaltend: einen unteren Behälter (1) mit einer Einlassöffnung und einen Zwischenbehälter (2) mit im wesentlichen einer Trichterform, der axial in dem unteren Behälter angeordnet ist, welcher untere Behälter mit elektrischen Heizeinrichtungen (33, 50) verbunden ist, um Wasser, das darin enthalten ist, zu erhitzen, welcher Zwischenbehälter wenigstens eine perforierte Platte (6) enthält, womit eine Begrenzungskammer (10) für das Kaffeepulver definiert ist; einen oberen Behälter (3), der axial und entfernbar an dem unteren Behälter montiert ist und mit dem letzteren über den Zwischenbehälter in Verbindung steht; Einrichtungen (4, 7) zum reversiblen Verbinden des Zwischenbehälters mit dem unteren Behälter in einer dichten Weise bezüglich der Außenseite, **dadurch gekennzeichnet, dass** der untere Behälter (1) hydraulisch über Pumpeinrichtungen (27) mit einem Wasserreservoir (25) verbunden ist, welches Reservoir längs dem unteren Behälter und an derselben Halterung (21) angeordnet ist, wobei das Wasser in den unteren Behälter nahe den elektrischen Heizeinrichtungen zugeführt wird, wobei auch Einrichtungen (34, 35) vorgesehen sind, um den Druck des erhitzten Wassers und/oder des erzeugten Kaffees zu kontrollieren, so dass ein Ausgeben des Kaffees in den oberen Behälter nur stattfindet, wenn der Wasser-/Kaffeedruck einen vorgegebenen Wert erreicht.

2. Kaffeemaschine nach Anspruch 1, wobei die wasserdichten Verbindungseinrichtungen über dem Zwischenbehälter (2) einen scheibenförmigen Körper (4) enthalten, der durch eine damit integrale Umfangshülse (5) begrenzt ist und der reversibel mit dem unteren Behälter (1) verbunden werden kann, welcher scheibenförmige Körper (4) mit einer Ringdichtung (7) versehen ist, die gegen den unteren Behälter abgedichtet ist, wenn die Hülse mit dem unteren Behälter verbunden ist, welcher scheibenförmige Körper auch einen Durchgang (15) hat, um die Kammer in Verbindung mit dem oberen Behälter zu versetzen.

3. Kaffeemaschine nach Anspruch 1 oder 2, wobei die wasserdichten Verbindungseinrichtungen ein erstes axiales Rohrelement (12) enthalten, das in dem oberen Behälter (3) verläuft, welcher eine Bodenwand (3a) hat, wovon sich ein zweites Rohrelement (13) erhebt, welches zweite Rohrelement koaxial und verschiebbar in Relation zu dem ersten Rohrelement montiert ist, wobei das letztere mit der Kammer (10) des Zwischenbehälters (2) in Verbindung steht und an seinem freien Ende zum Ausgeben des erzeugten Kaffees mit Einrichtungen (16) versehen ist, die zum Erzeugen einer wasserdichten Dichtung zwischen dem ersten und dem zweiten Rohrelement geeignet sind.

4. Kaffeemaschine nach Anspruch 3, wobei die Ausgabeeinrichtungen eine Kegelstumpfhülse (16), die in einem entsprechend aufgeweiteten Endteil des ersten Rohrelements (12) in Eingriff ist, und einen Rand (17) enthalten, der sich radial von der Hülse erstreckt und um den Endteil des zweiten Rohrelements (13) herum angeordnet ist.

5. Kaffeemaschine nach einem der vorhergehenden Ansprüche, wobei der Einlass des unteren Behälters seitlich durch eine Rohrwand (1a) begrenzt ist und die Hülse (5) reversibel an der Wand angebracht ist.

6. Kaffeemaschine nach einem der vorhergehenden Ansprüche, wobei die Pumpeinrichtungen (27) innerhalb der Halterung (21) angeordnet sind.

7. Kaffeemaschine nach einem der Ansprüche 1 bis 5, wobei die Pumpeinrichtungen (27) innerhalb eines kastenförmigen Körpers (46) angeordnet sind, der mit dem unteren Behälter (1) integral und von der Halterung (21) abnehmbar ist.

8. Kaffeemaschine nach einem der Ansprüche 1 bis 5, wobei die Pumpeinrichtungen in einem Hohlraum (55) angeordnet sind, der in dem Wasserreservoir (25) ausgebildet ist, und fest mit dem unteren Behälter (1) und mit dem Reservoir (25) verbunden sind.

9. Kaffeemaschine nach einem der vorhergehenden Ansprüche, wobei der Zwischenbehälter (2) entfernbar und dicht mit dem unteren Behälter (1) verbunden ist und ein Gefäß (9) mit perforiertem Boden (9a) für den Kaffee beherbergt, das davon abnehmbar ist.

10. Kaffeemaschine nach Anspruch 9, wobei Elastikeinrichtungen (11) zwischen dem Boden (9a) des Gefäßes (9) und dem Zwischenbehälter vorgesehen sind und in einem komprimierten Zustand sind, so dass das Gefäß (9) durch Entfernen der wasserdichten Verbindungseinrichtungen gezwungen ist, sich axial in Relation zu dem Zwischenbehälter (2) zu verschieben und teilweise davon vorzustehen.

11. Kaffeemaschine nach einem der Ansprüche 1 bis 8, wobei der Zwischenbehälter (2) in einer frei verschiebbaren Weise in Relation zu dem unteren Behälter (1) montiert ist und die Dichtung (7), die integral mit den wasserdichten Verbindungseinrichtungen (4, 5) ist, einen axialen ringartigen Fortsatz (37) hat, der innerhalb des Zwischenbehälters (2) verläuft und einen vergrößerten Teil (37a) hat, der in eine Ringnut (38) davon eingreift, so dass der Zwischenbehälter (2) elastisch integral mit den wasserdichten Verbindungseinrichtungen (4, 5) wird, und, wenn diese von dem unteren Behälter getrennt werden, der Zwischenbehälter zusammen mit ihnen heraus gezogen wird.

12. Kaffeemaschine nach einem der vorhergehenden Ansprüche, wobei der Zwischenbehälter (2) ein Rohrteil (2b) enthält, das sich in den unteren Behälter (1) erstreckt, welche Einrichtungen (34) zum Kontrollieren des Druckes des Wassers darin angeordnet sind.

13. Kaffeemaschine nach einem der vorhergehenden Ansprüche, wobei das erste Rohrelement (12) eine Auslassleitung (15) von der Kammer definiert, wobei Ventileinrichtungen (35) zum Erzeugen eines beschränkten Querschnittes für die **dadurch** hindurch gehende Flüssigkeitsströmung vorgesehen sind.

14. Kaffeemaschine nach einem der Ansprüche 1 bis 11, wobei das erste Rohrelement (12) eine Auslassleitung (15) von der Kammer definiert, welche Einrichtungen (34, 35) zum Kontrollieren des Druckes des erzeugten Kaffees darin angeordnet sind.

15. Kaffeemaschine nach einem der vorhergehenden Ansprüche, wobei in der Bodenwand (3a) des oberen Behälters (3) eine Nut (14) längs des Umfangs für den Eingriff der Hülse (5) ausgebildet ist.

16. Kaffeemaschine nach einem der vorhergehenden Ansprüche, wobei der untere Behälter (1) integral mit den Pumpeinrichtungen (27) verbunden ist.

17. Kaffeemaschine nach einem der Ansprüche 1 bis 15, wobei der untere Behälter (1) dicht in einer lösbaren weise mit den Pumpeinrichtungen (27) verbunden ist.

18. Kaffeemaschine nach Anspruch 17, wobei die lösbare wasserdichte Verbindung ein An-Aus-Ventil (40) an dem Auslass einer Hülse (41), die in dem Ausgaberohr (30) der Pumpeinrichtungen (27) in Eingriff ist, ein erstes Gehäuse (23a), das an der Basis (23) ausgebildet ist, in welcher die Hülse (41) zur lösbaren Verbindung mit der Basis in Eingriff ist, und ein zweites Gehäuse (43) enthält, das an der Bodenwand (39) des unteren Behälters (1) koaxial mit dem ersten Gehäuse (23a) ausgebildet ist, um das Auslassende der Hülse (41) und das An-Aus-Ventil (40) dicht aufzunehmen.

19. Kaffeemaschine nach einem der vorhergehenden Ansprüche, wobei in dem unteren Behälter (1) eine Einlasswasserdüse (32) vorgesehen ist, die hydraulisch mit der Ausgabeleitung (30) verbunden ist, um Wasser tangential zu der Basis (39) des Behälters (1) zuzuführen.

## Revendications

1. Machine à café domestique pour la production de café expresso, comportant : un récipient inférieur (1) avec une ouverture d'entrée et un récipient intermédiaire (2) sensiblement en forme d'entonnoir placé axialement dans ledit récipient inférieur, ledit récipient inférieur étant associé à des moyens de chauffage électrique (33, 50) pour chauffer l'eau qu'il contient, ledit récipient intermédiaire comportant au moins une plaque perforée (6) définissant une chambre réceptacle (10) pour la poudre de café; un récipient supérieur (3) monté axialement et de façon démontable sur ledit récipient inférieur et communicant avec ce dernier par l'intermédiaire du dit récipient intermédiaire ; des moyens (4, 7) pour connecter de façon réversible ledit récipient intermédiaire au dit récipient inférieur d'une façon étanche par rapport à l'extérieur, **caractérisé en ce que** ledit récipient inférieur (1) est relié hydrauliquement à un réservoir d'eau (25) via des moyens de pompe (27), ledit réservoir étant situé à côté du dit récipient inférieur et sur le même support (21), l'eau étant introduite dans ledit récipient inférieur à proximité des dits moyens électriques de chauffage, des moyens (34, 35) étant également prévus pour contrôler la pression de l'eau chaude et/ou du café produit de sorte que la distribution du café dans ledit récipient supérieur n'ait lieu que lorsque la pression eau/café atteint une valeur prédéterminée.

2. Machine à café selon la revendication 1, dans laquelle lesdits moyens de connexion étanches à l'eau comportent un corps en forme de disque (4) au-dessus du dit récipient intermédiaire (2) délimité par un manchon périphérique (5) faisant partie intégrante du corps et qui peut être connecté de façon réversible au dit récipient inférieur (1), ledit corps en forme de disque (4) étant muni d'un joint annulaire (7) qui est inséré de façon étanche contre ledit récipient inférieur quand ledit manchon est connecté au dit récipient inférieur, ledit corps en forme de disque (4) ayant aussi un passage (15) pour mettre en communication ladite chambre avec ledit récipient supérieur.

3. Machine à café selon l'une des revendications 1 et 2, dans laquelle lesdits moyens de connexion étanches à l'eau comportent un premier élément tubulaire axial (12), s'étendant dans ledit récipient supérieur (3) qui a une paroi de fond (3a) de laquelle s'élève un second élément tubulaire (13), ledit second élément tubulaire étant monté de façon coaxiale et coulissante par rapport au dit premier élément tubulaire, ce dernier communiquant avec la chambre (10) du dit récipient intermédiaire (2) et étant muni à son extrémité libre de moyens (16) pour distribuer le café produit, conçus pour réaliser un joint étanche à l'eau entre lesdits premier et second éléments tubulaires.

4. Machine à café selon la revendication 3, dans laquelle lesdits moyens de distribution comportent un manchon en tronc de cône (16) engagé dans une partie d'extrémité du dit premier élément tubulaire (12) évasée de façon correspondante et d'une jupe (17) s'étendant radialement à partir du dit manchon et placée autour de la partie d'extrémité du dit second élément tubulaire (13).

5. Machine à café selon l'une quelconque des revendications précédentes, dans laquelle l'entrée du dit récipient inférieur est délimitée latéralement par une paroi tubulaire (1a), ledit manchon (5) étant fixé de façon réversible à ladite paroi.

6. Machine à café selon l'une quelconque des revendications précédentes, dans laquelle lesdits moyens de pompe (27) sont situés à l'intérieur du dit support (21).

7. Machine à café selon l'une quelconque des revendications 1 à 5, dans laquelle lesdits moyens de pompe (27) sont situés à l'intérieur d'un corps en forme de boîtier (46) faisant partie intégrante du dit récipient inférieur (1) et apte à être enlevé du dit support (21).

8. Machine à café selon l'une quelconque des revendications 1 à 5, dans laquelle lesdits moyens de pompe (27) sont placés dans une cavité (55) formée dans ledit réservoir d'eau (25) et sont reliés fixement au dit récipient inférieur (1) et au dit réservoir (25).

9. Machine à café selon l'une quelconque des revendications précédentes, dans laquelle ledit récipient intermédiaire (2) est relié de façon démontable et étanche au dit récipient inférieur (1) et loge de façon démontable un container (9) pour la poudre de café avec un fond perforé (9a).

10. Machine à café selon la revendication 9, dans laquelle des moyens élastiques (11) sont prévus, entre le fond (9a) du dit container (9) et ledit récipient intermédiaire, et sont dans un état comprimé, de sorte qu'en enlevant lesdits moyens de connexion étanches à l'eau, ledit container (9) soit obligé de glisser axialement par rapport au dit récipient intermédiaire (2) et d'en sortir partiellement.

11. Machine à café selon l'une quelconque des revendications 1 à 8, dans laquelle ledit récipient intermédiaire (2) est monté coulissant de façon libre par rapport au dit récipient inférieur (1) et le joint (7) faisant partie intégrante des dits moyens de connexion étanches à l'eau (4, 5) a un appendice annulaire axial (37) s'étendant dans ledit récipient intermédiaire (2) et ayant un bossage (37a) qui s'engage dans une gorge annulaire (38), de sorte que ledit récipient intermédiaire (2) fasse élastiquement partie intégrante des dits moyens de connexion étanches à l'eau (4, 5) et que, quand ceux-ci sont séparés du dit récipient inférieur, ledit récipient intermédiaire soit enlevé avec eux.

12. Machine à café selon l'une quelconque des revendications précédentes, dans laquelle ledit récipient intermédiaire (2) comporte une partie tubulaire (2b) s'étendant dans ledit récipient inférieur (1), lesdits moyens (34) pour contrôler la pression de l'eau y étant situés.

13. Machine à café selon l'une quelconque des revendications précédentes, dans laquelle ledit premier élément tubulaire (12) définit un conduit de sortie (15) partant de ladite chambre, et dans lequel des moyens de valve (35) sont prévus pour créer une section rétrécie pour l'écoulement du liquide y passant.

14. Machine à café selon l'une quelconque des revendications 1 à 11, dans laquelle ledit premier élément tubulaire (12) définit un conduit de sortie (15) partant de ladite chambre, les moyens de contrôle (34, 35) de la pression du café produit y étant situés.

15. Machine à café selon l'une quelconque des revendications précédentes, dans laquelle une gorge (14) est formée sur la périphérie de la paroi de fond (3a) du dit récipient supérieur (3), pour y loger ledit manchon (5).

16. Machine à café selon l'une quelconque des revendications précédentes, dans laquelle ledit récipient inférieur (1) est relié de façon intégrée aux dits moyens de pompe (27).

17. Machine à café selon l'une quelconque des revendications 1 à 15, dans laquelle ledit récipient inférieur (1) est connecté aux dits moyens de pompe (27) de façon étanche et amovible.

18. Machine à café selon la revendication 17, dans laquelle ladite connexion étanche à l'eau et amovible comporte une valve tout-ou-rien (40) à la sortie d'un manchon (41) situé dans ledit tube d'éjection (30) des dits moyens de pompe (27), un premier logement (23a) réalisé dans ladite embase (23) dans lequel ledit manchon (41) est engagé pour un raccordement amovible avec ladite embase et un second logement (43) réalisé dans la paroi de fond (39) du dit récipient inférieur (1) coaxialement au dit premier logement (23a) pour loger de façon étanche l'extrémité de sortie du dit manchon (41) et la valve tout-ou-rien (40).

19. Machine à café selon l'une quelconque des revendications précédentes, dans laquelle une buse d'admission d'eau (32) est prévue dans ledit récipient inférieur (1), reliée hydrauliquement au dit conduit d'éjection (30) pour l'alimentation en eau du dit récipient (1) tangentiellement à l'embase (39).
